# EUROPEAN PATENT APPLICATION

(11) **EP 1 619 612 A1**
(43) Date of publication of application: **25.01.2006**
(21) Application number: 04076871.5
(22) Date of filing: 29.06.2004
(51) Int. Cl.: G06Q 10/00

(54) **Product modelling**

(71) Applicant: Atos Origin Nederland B.V., 3528 BJ Utrecht (NL)
(72) Inventor: Kema, Hans Hendericus, 9721 GP Groningen (NL); Kok, Gerardus Henricus Antonius, 2585 SX Den Haag (NL); Van der Kallen, Hein Willibrord Albert, 2253 VR Voorschooten (NL); Wester, Johan Jacob, 9737 JC Groningen (NL); Wagenaar, Eduard Richard Harm, 9678 PE Westerlee (NL); Van Gent, Pieter, 9722 EE Groningen (NL); Michel, Paul Heiko, 9721 WT Groningen (NL)
(74) Representative: de Vries, Johannes Hendrik Fokke

(57) **Abstract**

A method of modelling products and managing a product database comprises the steps of providing a product model (200) having three layers: a product type layer (210), a standard product layer (220) and an individual product layer (230). Each layer contains associated properties. The product model may be extended with delivery agreements associated with the respective layers. The method further utilizes cardinalities for associating products, properties, delivery agreement and other model items. An order manager system may advantageously embody the method of the present invention.

## Description

The present invention relates to product modelling. More in particular, the present invention relates to a method and a device for modelling products offered by an organisation in a single generic product model.

A product model uses information concerning products and their properties and defines the format of this information and of the relationships between information items.

In this document the term "product" may refer to the result of the activities of an organization, such as a tangible product (a physical article) or an intangible product (a service), to the activity itself, or to a combination of the activity and its result.

It has been found that it is difficult to create a product model that is both flexible and is capable of accommodating various types of different products. When a new product is introduced, it should be possible to easily include the new product in the product model, irrespective of the properties of the new product. In addition, the product model should provide a convenient basis for standardisation in systems using different data formats, such as order manager systems which include both modern components and so-called legacy systems using less common or obsolete product models and/or data formats.

It is an object of the present invention to overcome these and other problems of the Prior Art and to provide a product model that is flexible and allows various types of products to be included.

It is another object of the present invention to provide a product model that may serve as a common standard among various systems.

It is yet another object of the present invention to provide a computer program product designed for carrying out the method of the present invention.

It is still another object of the present invention to provide a device for product model management, and an order management system provided with a product model.

Accordingly, the present invention provides a method of modelling products, the method comprising the step of providing a product model having:
- a product type layer defining at least one product type and an associated property type,
- a standard product layer defining at least one standard product and an associated standard property, and
- an individual product layer defining at least one individual product and an associated individual property,
which method comprises the further steps of:
- defining inheritance relations between corresponding objects in adjacent layers.
By providing three layers, a great measure of flexibility is provided in the product model. The layers, which are arranged hierarchically, comprise a product type layer defining a product at the most general level, a standard product layer defining a standard product, and an individual product layer (also called "product layer") defining the actual products sold. Each layer has associated attributes which are shared between a particular layer and the layer below it, so that a lower layer may "inherit" the attributes of the higher layers. Inheritance relations determine which attributes are shared between objects and to which extent they are shared. When managing the information (data) in a particular layer, the method of the present invention intelligently uses the information in the layers above.

The corresponding objects referred to above may be product type, standard product and individual product, but also property type, standard property and individual property.

Although it would have been possible to provide only two layers, the three layer model of the present invention allows more common properties to be shared among different products and is therefore more economical.

It is noted that the product model of the present invention may be extended to four or more layers without requiring any inventive activity.

Advantageously, the standard product layer further comprises a standard delivery agreement (set of terms of delivery), and wherein the individual product layer comprises an individual delivery agreement. A standard price component may be associated with the standard delivery agreement, and wherein an individual price component is associated with the individual delivery agreement.

A property type may involves indicators for indicating attributes of said property type.

When an individual property is associated with a single individual property in the bottom layer it models a property value of the individual product. When an individual property is associated with two individual products it models a relation between these products. In addition, functional relations between (individual) products and components in (individual) product packages may be modelled. Similarly, standard properties and property types may model values or relations in the other two layers.

Advantageously, the standard product layer may further comprise a standard delivery agreement (that is, an offer for a standard product and its components on certain terms of delivery), and wherein the individual product layer comprises an individual delivery agreement (that is, an offer for an individual product and its components on certain terms of delivery). Standard price components, that are specific to a standard product, may be applicable within the standard delivery agreement, while individual price components, that are specific to an individual product, may be applicable within an individual delivery agreement.

In a preferred embodiment, a standard price component is associated with the standard delivery agreement, and wherein an individual price component is associated with the individual delivery agreement.

Advantageously, a property type may involve indicators for indicating attributes of said property type.

In a further advantageous embodiment, the standard product may be subdivided into a product formula, a general product and a product variety.

The method of the present invention may further comprise the step of defining any constraints on relations using cardinalities.

The present invention additionally provides a computer program product for carrying out the method as defined above, a device for managing a product database, and an order manager system in which the invention is utilized. More in particular, the present invention additionally provides a system for managing orders, the system comprising:
- an engine module for processing order-related data,
- at least one database coupled to the engine module for storing and/or retrieving order-related data, and
- a product model module coupled to the engine module for applying a standard product model to the order-related data, irrespective of their source,

wherein the product model module is arranged for:
- providing a product type layer defining at least one product type and an associated property type,
- providing a standard product layer defining at least one standard product and an associated standard property,
- providing an individual product layer defining at least one individual product and an associated individual property, and
- defining inheritance relations between corresponding objects in adjacent layers.
It is noted that a computer program product as referred to above may comprise a software program stored on a suitable carrier, such as a CD or DVD, the software program being designed for carrying out the method steps of the present invention on a suitable processing device, such as a general-purpose computer or a dedicated processor.

The present invention will further be explained below with reference to exemplary embodiments illustrated in the accompanying drawings, in which:
Fig. 1 schematically shows a product model in accordance with the present invention.
Fig. 2 schematically shows the use of cardinalities in a product model in accordance with the present invention.
Fig. 3 schematically shows an order manager system in which a product model in accordance with the present invention may be utilized.

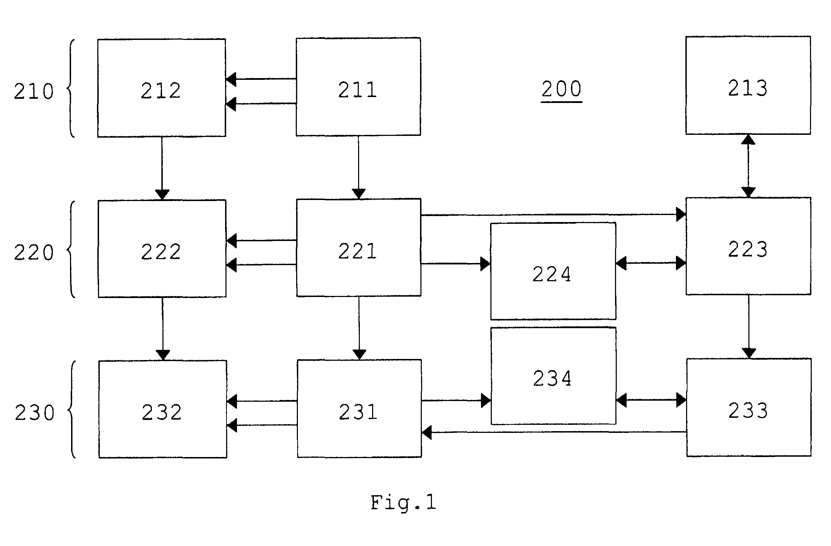

The product model 200 shown merely by way of non-limiting example in Fig. 1 comprises three layers which are hierarchically arranged: a (top) product type layer 210, a (middle) standard product layer 220 and a (bottom) individual product layer 230. The product type layer 210 comprises a product type 211 and an associated property type 212. Similarly, the standard product layer 220 comprises a standard product 221 and an associated standard property 222, while the individual product layer 230 comprises an individual product 231 and an associated individual property 232.

The product model 200 of Fig. 1 is shown to also comprise an optional sales part comprising a standard delivery agreement 223 associated with the standard product 221, an individual delivery agreement 233 associated with the individual product 231 and a sales channel 213 above the standard delivery agreement 223. This sales channel 213 can be considered part of the product type layer 210 although this is not essential. Associated with the standard delivery agreement 223 and the individual delivery agreement 233 are a standard price component 224 and an individual price component 234 respectively.

It is noted that the term "individual" is used to clearly distinguish the bottom layer 230 from the other layers. However, the individual product layer 230 and its elements may also be referred to as product layer 230, product 231, property 232, delivery agreement 233 and price component 234.

In the present invention, a product, such as a telephone set, is considered to have both a form and a function. Products having substantially the same form constitute a product class. A product type (211 in Fig. I) is a classification based on both form and function.

Every (individual) product belongs to exactly one product type. The product type is the "mould" in which products are made in the present invention, as the kind of properties that products of this product type may have are determined by the product's form and functions.

Introducing a new product type involves the following steps:
1. defining a product type with an associated name and product class,
2. defining the function contributions, and
3. defining the property types that are possible on the basis of the product classes and the function contributions, and which are relevant for this product type.
The function contributions are the additional functions or functionalities that a new product type provides.

A telephone set, for example, adds the function contribution "providing a ring tone" to the function "being contactable". Several property types follow from the product class "material article" and the function contributions: dimensions, design, colour, hands-free available, etc..

The product type 211 and the property type 212 define a product at the highest, most abstract level. A standard product 221 and its associated standard properties 222 are derived from the product type 211 and the property type 212 respectively. A standard product 221 is a specialisation of a product type 211. All standard products of a single product type have the same form (material article, service, etc.) and offer the same functionality. Standard products differ only in the way in which they achieve this functionality.

An individual product 231 is the actual, physical product supplied to the customer. Individual products provide functionality to a customer. Product types and standard products are abstractions of individual products.

Individual products are typically interchangeable for the customer, they may have different serial numbers while sharing an identical catalogue number. The catalogue number refers to the standard product 221, the serial number to the individual product 231.

Products, standard products and product types may have attributes and properties. An attribute is, for example, the name of a standard product. Properties depend on the product class, only standard products of the product class "material articles" can have the property "colour".

In the present invention, properties are assigned to products by means of property types that have been assigned to product types. A property type is therefore an abstraction of both a standard property and an individual property. Properties arise out of property types by assigning values to (individual) products.

For example, "colour" is a property type of the product type "telephone set". The value "red" can be assigned to the property type, in which case a specific telephone set will have the property "colour = red". It is noted that typically there will be several property types "colour", for example one for each material product type.

Similar or identical properties may constitute a property class. A property class, which serves as a "mould" to create property types, is related to either a product class or a function. Product types belonging to the particular product class or contributing to the particular function may have a property type in accordance with the property class concerned.

A property type may have attributes: a name and a predicate, the predicate identifying the property class. A property type may also have indicators defining aspects of the predicates, and cardinalities controlling the numericality of relationships and values.

Indicators provide additional information on property types. Various indicators may be distinguished, for example:
- standard: indicates that standard properties are meaningful at the standard product level, and
- formula: indicates that the standard property is registered at a product formula.
Indicators may be advantageously used in software implementations.

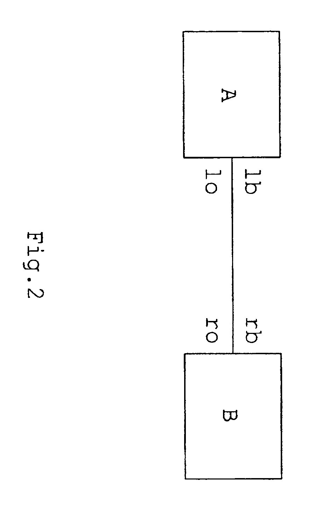

Cardinalities constrain the number of occurrences of underlying standard properties or individual properties. This is illustrated in Fig. 2, where two entities A and B are shown. The relationship R between the entities A and B is specified by the cardinalities 1b, lo, rb and ro, where 1 stands for left, r for right, b for above and o for below. The cardinalities 1b and rb indicate maximum values while the cardinalities lo and 1b indicate minimum values. Thus 1b indicates the maximum occurrence of A per B while lo indicates the minimum occurrence of A per B. Similarly, rb indicates the maximum occurrence of B per A while ro indicates the minimum occurrence of B per A.

Cardinalities for the properties at a lower level can be given at a higher level. In the property type describing the telephone number property of telephone lines, for example, cardinalities may determine that each individual telephone line must have exactly one telephone number.

It will be understood that standard properties may also have attributes and cardinalities.

A standard product may have three levels or aspects, in addition to the three layers of the product model 200: product formula, general product and product variety. Product variety, the lowest level, is typically equal to the standard product 221 of Fig. 1. General product is a classification (generalisation) of product variety on the basis of commercial similarity: the same functionalities and the same base price. Product formula is a classification of general product on the basis of commercial similarity, some properties are shared.

One or more general products are of the same product formula, while one or more varieties are of the same general product. Product varieties provide the same functionality but differ with respect to one or more minor properties, for example colour. The general products of a product formula are essentially different but also have common properties, making them commercially similar.

This structure may be reflected in a name: the name of a product formula typically begins with the name of the product type; the names of the general product typically begins with the (full) name of the product formula; the name of a product variety begins with the (full) name of the general product.

Referring again to Fig.1, a standard delivery agreement 223 is an offer in which the delivery of a standard product is offered under certain conditions (terms). An individual delivery agreement 233 is derived from the standard delivery agreement 223 and provides that a customer orders one or more units of the standard product that is on offer on the given terms in the standard delivery agreement 223.

For each ordered item an individual product can be made or supplied and each property type of the individual product serves as a potential question that can be asked to configure the individual product. The answers to the questions constitute individual properties. The cardinalities mentioned above constrain the number of allowed answers on each question.

A property type describing a component relation between products triggers questions on the desired number of components of allowed standard products. The answers to these questions constitute component relations between the original product as ordered and a new component product. This new component product triggers new questions. In this iterative way a complete bill-of-material of complex ordered products may be configured.

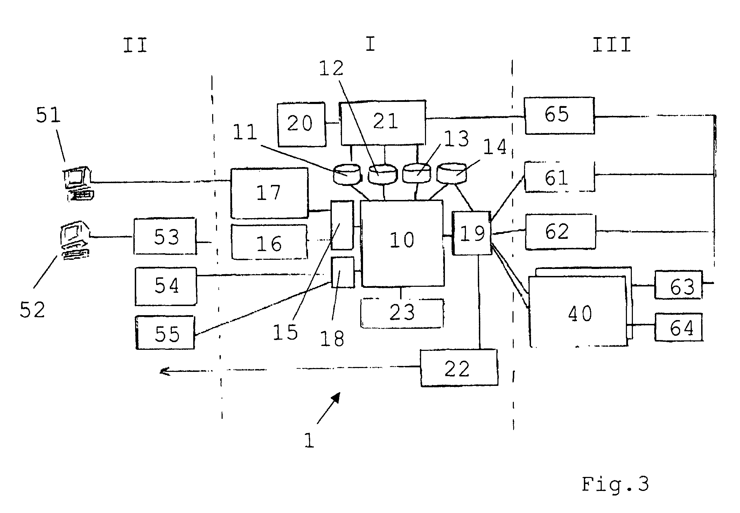

The present invention may be utilized in various applications. It is particularly useful in order manager systems, an example of which will now be discussed with reference to Fig. 3.

The order manager system I shown merely by way of non-limiting example in Fig. 3 comprises an engine module 10, databases 11, 12, 13 and 14, front-end coupling modules 15, 16, 17 and 18, a transaction server module 19, a product model module 20, a data import module 21, an (optional) message generator 22, and a process control module 23. The exemplary front-end depicted in Fig. 3 comprises Web (Internet) terminals 51 and 52, a dedicated web front-end unit 53, a presales unit 54, and a wholesale unit 55. The exemplary back-end comprises a billing system 61, an infrastructure unit 62, an inventory unit 63, a planning unit 64, and a match & merge unit 65. Order fulfilment modules 40 are arranged between the transaction server 19 on the one hand and the inventory system unit 63 and the planning unit 64 on the other hand.

In Fig. 3, the order system as a whole is shown to be divided into three domains: an order manager domain I which is essentially comprised of the order manager system 1, a front-end domain II and a back-end domain III. It is noted that the order fulfilment modules 40, although located in the back-end domain III, may be considered part of the order manager system 1. The three domains I, II and III together constitute an order system of which the order manager system 1 is a vital part.

The engine module 10 may be constituted by an engine, for example a workflow engine, known *per se.* Such engines, which are typically constituted by software programme packages, are commercially available. The engine module 10 receives order-related data from the front-end via the front-end coupling modules 15 and 18. These data are processed using the databases 11-14 and passed on to the transaction server module 19 which routes the processed order-related data to the appropriate back-end unit. The engine module 10 also generates feedback to the front-end in response to database queries or data received from the back-end.

In the embodiment of Fig. 3, there are four database units 11-14 that each contain a database or "dossier":
- database unit 11 contains the Product Dossier (PRDO) which holds all relevant product details, including standard properties, standard price components, suppliers, etc..
- database unit 12 contains the Customer Dossier (CUDO) which holds information regarding the customer: his/her name, address, service history, preferences, and/or credit rating.
- database unit 13 contains the Installed Base Dossier (IBDO) which holds the installed base, that is, the products in use.
- database unit 14 contains the Order Dossier (ORDO) which holds information on ordered products and order progress information.
It will be understood that the particular databases used depend on the type of products and services that are commercialized using the system. A telephone or telecommunications company will keep an Installed Base Dossier holding information on the subscriber lines and subscriber equipment, and possibly also on the common infrastructure. An on-line bookshop does typically not require this information.

The engine module 10 queries the dossiers PRDO, CUDO, IBDO and ORDO of the databases 11-14 to obtain information regarding a current order. The engine module 10 may, for example, verify the address of the customer, the price of the product ordered, the availability of the product ordered and may provide the customer with an estimate of the delivery date. The database information is kept current by the data import module 21 that is coupled to the database units 11-13 and that, in turn, receives update information from the match & merge unit 65. The match & merge unit 65 is coupled to various back-end units and collects data from these units. It is noted that in the embodiment of Fig. 3 the data import module 21 is not coupled to the database unit 14 containing the Order Dossier, as this Order Dossier may only be updated by the engine module.

The main function of the engine module 10 is to generate suitable questions, pass these questions to the front-end controller 15 and store any answers to these questions in the Order Dossier 14.

The data import module 21 is coupled to the product model module 20 which contains the product model that is used as a standard in the system. That is, all product-related data are matched with the product model so as to produce a "universal" set of product data within the system.

The product model has, in the preferred embodiment, three layers: a first layer defining a product type and its associated properties (type properties, a second layer defining a standard product and its associated properties (standard properties), and a third layer defining the individual product and its associated properties (individual properties). It has been found that this model provides a very practical product definition while also providing flexibility and a suitable basis for a product model that is universal within the order system.

The engine module 10 is connected to several front-end coupling modules for exchanging data with the front end: front-end controller module 15, dialogue manager module 16, web front-end module 17 and API (Application Program Interface) or retrieval module 18. The dialogue manager module 16 and the web front-end module 17 are coupled to the engine module 10 through the front-end controller module 15. The web front-end module 17 is coupled (via the Internet) to Internet terminal 51, while the dialogue manager module 16 is coupled, via a web sales front-end unit 53, to sales point terminal 52. The API (Application Program Interface) module 18 provides the interface between the engine module 10 and both a pre-sales system 54 and a wholesale system 55. It will be understood that the terminals 51 and 52, and the units 53, 54 and 55 are part of the front-end (front office), and that the order management system modules 15, 16, 17 and 18 provide an interface between the engine module 10 and these front-end units.

The front-end controller module 15 translates any queries from the engine module 10 into customer dialogues and processes the answers. In addition, the front-end controller processes the answers to questions not yet asked (so-called pre-filled questions) that are sent directly by a distribution channel of the back-end. The front-end controller 15 further controls the dialogue manager module 16 and the web front-end module 17. This web front-end module 17 presents order forms on the web terminal 51 and returns any answers to the front-end controller 15.

The dialogue manager module 16 allows front-end units to customise the appearance or "look and feel" of the system. To enhance its flexibility, the dialogue manager module 16 uses XML (Extended Mark-Up Language), in contrast to typical Internet applications that use the more rigid HTML (HyperText Mark-Up Language).

In the embodiment shown, the web front-end module 17 supports the following functions:
- placing orders, both via a linear dialogue and via a "shopping cart",
- viewing orders,
- viewing the customer's installed base,
- showing personal offers,
- ordering on the basis of personal offers,
- processing pre-filled questions.
This module therefore provides customers with to opportunity to place any orders themselves, thus eliminating the need for any interaction by sales persons.

As mentioned above, the dialogue manager module 16 facilitates the interaction between the front-end controller module 15 and the web sales unit 53. To this end, the dialogue manager module 16 presents order forms to the operator of the sales terminal 52. These order forms contain questions regarding the desired product or service, the customer placing the order, his/her address and credit data, and other information relevant to the ordering process. The dialogue manager module 16 performs error checking on these forms and returns the forms to the customer at the terminal 52 if any errors are detected.

Error checking and correction may carried out for each question (or cluster of questions) answered. That is, the dialogue manager module 16 is arranged in such a way that a check is carried out after each question (or cluster of questions) that has been answered, and the question (or cluster of questions) is repeated substantially immediately when an error is detected. This reduces the amount of data that has to be exchanged between the dialogue manager module 16 and the terminal 52, in particular when compared with Prior Art systems in which error checking is carried out per form and where the entire form has to be re-sent if an error is detected.

The dialogue manager module 16 is very flexible in that it allows the web sales front end unit(s) 53 to determine the "look and feel" of the ordering sales system: the web sales unit(s) may use the information provided by the dialogue manager module in a visual (and/or oral) format of their choosing. That is, the way in which the information (including questions) originating from the dialogue manager module is presented by the web front-end unit 53 and its associated terminal 52 is almost entirely determined by the web front-end unit 53.

The transaction server module 19 provides an interface between the engine module 10 and the back-end (back office) which comprises, in the present example, a billing unit 61, an infrastructure unit 62, an inventory unit 63 and a planning unit 64. Order fulfilment modules 40 facilitate the interaction with the inventory unit 63 and the planning unit 64.

As mentioned above, the API (Application Program Interface) retrieval module18 couples the presales system unit 54 and the wholesale unit 55 to the engine module 10. The API module 18 supports retrieval services: sales channels may retrieve information (for example client data, product data) from the order manager system using this API module. In addition, the API module 18 allows sales channels, such as the units 54 and 55, to place batch orders, thus providing direct automated access to the system. After the orders are entered in the Order Dossier 13 it is the task of the transaction server module 19 to confirm the order to the customer and to pass the order to back-end systems, such as an infrastructure unit 62 or order fulfilment modules 40.

The order management system of the present invention has six main functions.

The first function is providing a catalogue for all products that an organisation offers. The catalogue information can be entered in the product model module 20, is registered in the Product Dossier 11 and can be presented via the various front-ends. The product model assists in modelling, in a manner the customer can understand, only the information on standard products that is functionally or financially important to the customer.

The second function is providing an integral customer view based upon the Customer Dossier 12 and the Installed Base Dossier 13. The database information is kept current by the data import module 21 which is coupled to the database units 11 - 13 and which, in turn, receives update information form the match & merge unit 65. This match & merge unit 65 is coupled to various back-end units and collects data from these units.

The installed base information is typically stored on different back-end systems in incompatible technical formats. The product model of the present invention assists in modelling only the information that is functionally or financially important to a customer.

The third function is providing personalised offers to customers. This function is again based upon the dossiers 11-13. The Product Dossier I 1 indicates which (standard) delivery agreements require a relation with an existing product of a particular standard product. The Installed Base Dossier 13 indicates which products a customer already has in his possession and to which standard product these individual products belong. The combined information of these two dossiers allows a suitable delivery agreement to be selected as an extension of the installed base of the customer.

A personalised offer is not only suitable for finding products that are extensions of the installed base. It can also assist in ordering various modifications of existing products. This can be achieved by modelling these changes as products (activities) which a customer can order and which require a relation with the product to be modified.

The fourth and main function of the system is ordering. The order manager system may be considered as generating a dynamic order form with questions tailored for the requested standard product. The order manager system ensures that this form is completely filled in and that the answers conform with all business rules. This results in so-called clean orders.

The combination of a web front-end and a Product Dossier that only covers products and properties that have a functional meaning to the customer, as mentioned above, provides customers with the opportunity to place orders themselves, thus eliminating the need for any interactions by sales persons.

The fifth function of the system of Fig. 3 is providing simple order status tracking. To this end the back-end systems have to report the progress of the delivery of the requested products. The order manager can use this information to report any problems, to inform the customer and to trigger a billing unit 61 when delivery is completed.

The sixth function of the system I is updating the Installed Base Dossier 13 directly when a delivery agreement is made. This is facilitated by precise rules concerning the intended effect of an ordered product on the installed base. In the present invention, the Installed Base Dossier 13 is the leading source for information on the desired situation as requested by the customer, in this respect there is no need to rely on the data import module 21.

An Installed Base Dossier that shows the desired situation further enables so-called cross-selling, that is offering extensions and additions to products just ordered. This is a relatively simple variant of a personalised offer.

All of the above six functions are based upon the same product model, these functions are not required to change when new, different standard products have to be supported.

It should be noted that not all six of the above functions need to be present in a single embodiment and that embodiments can be envisaged in which fewer than these six functions are present. Conversely, some embodiments may have additional functions which have not been mentioned above.

The present invention is based upon the insight that a three-layered product model is flexible yet economical as it allows many different products to be defined while sharing as many product properties as possible between the layers. The present invention benefits from the further insight that cardinalities may be used to efficiently constrain the number of (allowed) relations between model items.

It will be understood by those skilled in the art that the present invention is not limited to the embodiments illustrated above and that many modifications and additions may be made without departing from the scope of the invention as defined in the appending claims.

## Claims

1. A method of modelling products, the method comprising the step of providing a product model (200) having:
• a product type layer (210) defining at least one product type (211) and an associated property type (212),
• a standard product layer (220) defining at least one standard product (221) and an associated standard property (222), and
• an individual product layer (230) defining at least one individual product (231) and an associated individual property (232),
which method comprises the further step of:
• defining inheritance relations between corresponding objects in adjacent layers (210, 220, 230).

2. The method according to claim 1, wherein the standard product layer (220) further comprises a standard delivery agreement (223), and wherein the individual product layer (230) comprises an individual delivery agreement (233).

3. The method according to claim 2, wherein a standard price component (224) is associated with the standard delivery agreement (223), and wherein an individual price component (234) is associated with the individual delivery agreement (233).

4. The method according to any of the preceding claims, wherein a property type (211) involves indicators for indicating attributes of said property type.

5. The method according to any of the preceding claims, wherein the standard product (221) is subdivided into a product formula, a general product and a product variety.

6. The method according to any of the preceding claims, further comprising the step of defining constraints on relations using cardinalities.

7. A computer program product for carrying out the method according to any of the preceding claims.

8. A device for managing a product database, the device comprising:
• means for providing a product type layer (210) defining at least one product type (211) and an associated property type (212),
• means for providing a standard product layer (220) defining at least one standard product (221) and an associated standard property (222), and
• means for providing an individual product layer (230) defining at least one individual product (231) and an associated individual property (232),
which device further comprises:
• means for defining inheritance relations between corresponding objects in adjacent layers (210, 220, 230).

9. The device according to claim 8, further comprising means for defining constraints on relations between model items using cardinalities.

10. A system (1) for managing orders, the system comprising:
• an engine module (10) for processing order-related data,
• at least one database (11, 12, 13, 14) coupled to the engine module for storing and/or retrieving order-related data, and
• a product model module (20) coupled to the engine module (10) for applying a standard product model to the order-related data, irrespective of their source,
wherein the product model module (20) is arranged for:
• providing a product type layer (210) defining at least one product type (211) and an associated property type (212),
• providing a standard product layer (220) defining at least one standard product (221) and an associated standard property (222),
• providing an individual product layer (230) defining at least one individual product (231) and an associated individual property (232), and
• defining inheritance relations between corresponding objects in adjacent layers (210, 220, 230).
